# EUROPEAN PATENT APPLICATION

(11) **EP 2 811 450 A1**
(43) Date of publication of application: **10.12.2014**
(21) Application number: 13743332.2
(22) Date of filing: 31.01.2013
(51) Int. Cl.: G06Q 50/14

(54) **FLIGHT-PLAN GENERATING APPARATUS**

(30) Priority: 01.02.2012 JP 2012019782
(71) Applicant: Agenda Co., Ltd., Sapporo-shi, Hokkaido 060-8737 (JP)
(72) Inventor: TANAKA, Shinji, Tokyo 162-0825 (JP); OKUBO, Osamu, Tokyo 162-0825 (JP)
(74) Representative: Hoffmann Eitle
(86) International application number: PCT/JP2013/000528
(87) International publication number: WO 2013/114883

(57) **Abstract**

When a plan generation condition including a departure point, a plurality of visit points, and a visit schedule is inputted, a flight-plan generating apparatus (2) selects the visit point at the longest distance from the departure point as a tentative BP, and retrieves a fare product from a fare product database (10) by using the tentative BP as a retrieval key. The flight-plan generating apparatus (2) also retrieves a fare product from the fare product database (10) by using a forced BP as the retrieval key. The forced BP is the visit point other than the tentative BP. By setting the visit point of the forced BP as a BP, the visit point of the tentative BP satisfies a stopover rule. The flight-plan generating apparatus (2) acquires operating flights in a plurality of zones from a CRS (4) or a GDS (5) on the basis of the fare products retrieved in this way, and generates a flight plan that includes a flight schedule formed of a combination of the operating flights and fares thereof. This enables the generation of flight plans with fewer omissions.

## Description

### Technical Field

The present invention relates to a flight-plan generating apparatus having a function of generating a flight plan to travel around a plurality of visit points with a round-trip airline ticket.

### Background Art

In recent years, a plurality of airline companies are making a computer reservation system (CRS) and a global destination system (GDS) practicable as a system for reserving a flight. The CRS and the GDS have a function of automatically generating a flight plan of a type to travel around a plurality of cities. However, the number of overseas cities to be traveled around departing from and arriving at Japan is limited to two or three.

Then, conventionally, a flight-plan generating apparatus capable of generating a flight plan of a type to travel around a plurality of cities is proposed (see Patent Literatures 1 and 2, for instance). When a plan generation condition is inputted from a travel agency terminal, the conventional flight-plan generating apparatus calculates a point to be a tentative breakpoint (tentative BP), and with the tentative BP point as one of conditions, selects applicable fare products from a fare product database. Then, according to rules of each product of the selected fare products, the conventional flight-plan generating apparatus generates a plurality of flight schedules. Specifically, using flights and appropriate fares in individual zones of an itinerary are applied, and the travel agency terminal presents a flight plan (a combination of the flight schedule and the appropriate fare).

However, since the conventional flight-plan generating apparatus retrieves (searches) the fare product with the point of the tentative breakpoint as a retrieval key, a product for which a breakpoint cannot be set there due to the rule of the fare product may be out of selections even if there is a possibility of generating an effective flight plan. Also, even if the product is included in the selections, it is possible that the flight plan is not generated since the appropriate fare cannot be applied. Therefore, it has been desired to develop a flight-plan generating apparatus capable of generating a flight plan with fewer omissions.

### Citation List

### Patent Literature

Patent Literature 1: Japanese Patent Laid-Open No. 2003-216701
Patent Literature 2: Japanese Patent Laid-Open No. 2007-257669

### Summary of Invention

### Technical Problem

The present invention has been made under the above-described circumstances. It is an object of the present invention to provide a flight-plan generating apparatus capable of generating a flight plan with fewer omissions.

### Solution to Problem

One aspect of the present invention is a flight-plan generating apparatus that generates a flight plan to travel around a plurality of visit points with a round-trip airline ticket. The flight-plan generating apparatus includes: a fare product database that stores information on fare products, the fare product database storing information on a plurality of visitable points determined for each fare product, information on whether or not each of the plurality of visitable points can be set as a breakpoint, information on whether or not each of the plurality of visitable points can be set as a forced breakpoint, and a stopover rule for the plurality of visitable points; a condition input unit to which a plan generation condition including a departure point, the plurality of visit points and a visit schedule is inputted; a tentative breakpoint selection unit that acquires information on a distance from the departure point to each of the plurality of visit points and selects the visit point at the longest distance from the departure point as a tentative breakpoint from the plurality of visit points; a first fare product retrieval unit that retrieves a fare product which includes the plurality of visit points in the plan generation condition in the plurality of visitable points and for which the visit point of the tentative breakpoint can be set as the breakpoint, from the fare product database, by using the plurality of visit points in the plan generation condition and the tentative breakpoint as a retrieval key; a second fare product retrieval unit that retrieves a fare product which includes the plurality of visit points in the plan generation condition in the plurality of visitable points and for which the visit point of the forced breakpoint can be set as the breakpoint, from the fare product database, by using the plurality of visit points in the plan generation condition and the forced breakpoint as the retrieval key; and a flight plan generation unit that acquires operating flights in a plurality of zones formed by the departure point and the plurality of visit points included in the plan generation condition from a computer reservation system on the basis of the fare products retrieved by the first fare product retrieval unit and the second fare product retrieval unit, thereby generating a flight plan including a flight schedule formed of a combination of the operating flights in the plurality of zones and fares thereof. The forced breakpoint is a visit point other than the tentative breakpoint, and by setting the visit point of the forced breakpoint as the breakpoint, the visit point of the tentative breakpoint can satisfy the stopover rule.

Another aspect of the present invention is a method that generates a flight plan to travel around a plurality of visit points with a round-trip airline ticket. A fare product database for storing information on fare products stores information on a plurality of visitable points determined for each fare product, information on whether or not each of the plurality of visitable points can be set as a breakpoint, information on whether or not each of the plurality of visitable points can be set as a forced breakpoint, and a stopover rule for the plurality of visitable points. The method includes, when a plan generation condition including a departure point, the plurality of visit points and a visit schedule is inputted, acquiring information on a distance from the departure point to each of the plurality of visit points, selecting the visit point at the longest distance from the departure point as a tentative breakpoint from the plurality of visit points, retrieving a fare product which includes the plurality of visit points in the plan generation condition in the plurality of visitable points and for which the visit point of the tentative breakpoint can be set as the breakpoint, from the fare product database, by using the plurality of visit points in the plan generation condition and the tentative breakpoint as a retrieval key, retrieving a fare product which includes the plurality of visit points in the plan generation condition in the plurality of visitable points and for which the visit point of the forced breakpoint can be set as the breakpoint, from the fare product database, by using the plurality of visit points in the plan generation condition and the forced breakpoint as the retrieval key, and acquiring operating flights in a plurality of zones formed by the departure point and the plurality of visit points included in the plan generation condition from a computer reservation system on the basis of the fare products retrieved by a first fare product retrieval unit and a second fare product retrieval unit, thereby generating a flight plan including a flight schedule formed of a combination of the operating flights in the plurality of zones and fares thereof. The forced breakpoint is a visit point other than the tentative breakpoint, and by setting the visit point of the forced breakpoint as the breakpoint, the visit point of the tentative breakpoint can satisfy the stopover rule.

Another aspect of the present invention is a program for generating a flight plan to travel around a plurality of visit points with a round-trip airline ticket. A fare product database for storing information on fare products stores information on a plurality of visitable points determined for each fare product, information on whether or not each of the plurality of visitable points can be set as a breakpoint, information on whether or not each of the plurality of visitable points can be set as a forced breakpoint, and a stopover rule for the plurality of visitable points. The program makes, when a plan generation condition including a departure point, the plurality of visit points and a visit schedule is inputted, a computer execute: processing of acquiring information on a distance from the departure point to each of the plurality of visit points and selecting the visit point at the longest distance from the departure point as a tentative breakpoint from the plurality of visit points; processing of retrieving a fare product which includes the plurality of visit points in the plan generation condition in the plurality of visitable points and for which the visit point of the tentative breakpoint can be set as the breakpoint, from the fare product database, by using the plurality of visit points in the plan generation condition and the tentative breakpoint as a retrieval key; processing of retrieving a fare product which includes the plurality of visit points in the plan generation condition in the plurality of visitable points and for which the visit point of the forced breakpoint can be set as the breakpoint, from the fare product database, by using the plurality of visit points in the plan generation condition and the forced breakpoint as the retrieval key; and processing of acquiring operating flights in a plurality of zones formed by the departure point and the plurality of visit points included in the plan generation condition from a computer reservation system on the basis of the fare products retrieved by a first fare product retrieval unit and a second fare product retrieval unit, thereby generating a flight plan including a flight schedule formed of a combination of the operating flights in the plurality of zones and fares thereof. The forced breakpoint is a visit point other than the tentative breakpoint, and by setting the visit point of the forced breakpoint as the breakpoint, the visit point of the tentative breakpoint can satisfy the stopover rule.

As described below, the present invention has other aspects. Therefore, the disclosure of the invention aims to provide some aspects of the present invention, and does not aim to limit the scope of the invention described and claimed herein.

### Brief Description of Drawings

[Figure 1] Figure 1 is a configuration diagram of a flight reservation system in an embodiment of the present invention.
[Figure 2] Figure 2 is a block diagram of a flight-plan generating apparatus in the embodiment of the present invention.
[Figure 3] Figure 3 is an explanatory diagram of a tentative BP, a forced BP and a BP candidate in the embodiment of the present invention.
[Figure 4] Figure 4 is a flowchart for describing operations of the flight-plan generating apparatus in the embodiment of the present invention.

### Description of Embodiments

Hereinafter, the present invention will be described in detail. However, the detailed descriptions below and attached drawings do not limit the invention.

The flight-plan generating apparatus of the present invention is the flight-plan generating apparatus that generates a flight plan to travel around a plurality of visit points with a round-trip airline ticket, and the flight-plan generating apparatus includes: a fare product database that stores information on fare products, the fare product database storing information on a plurality of visitable points determined for each fare product, information on whether or not each of the plurality of visitable points can be set as a breakpoint, information on whether or not each of the plurality of visitable points can be set as a forced breakpoint, and a stopover rule for the plurality of visitable points; a condition input unit to which a plan generation condition including a departure point, the plurality of visit points and a visit schedule is inputted; a tentative breakpoint selection unit that acquires information on a distance from the departure point to each of the plurality of visit points and selects the visit point at the longest distance from the departure point as a tentative breakpoint from the plurality of visit points; a first fare product retrieval unit that retrieves a fare product which includes the plurality of visit points in the plan generation condition in the plurality of visitable points and for which the visit point of the tentative breakpoint can be set as the breakpoint, from the fare product database, by using the plurality of visit points in the plan generation condition and the tentative breakpoint as a retrieval key; a second fare product retrieval unit that retrieves a fare product which includes the plurality of visit points in the plan generation condition in the plurality of visitable points and for which the visit point of the forced breakpoint can be set as the breakpoint, from the fare product database, by using the plurality of visit points in the plan generation condition and the forced breakpoint as a retrieval key; and a flight plan generation unit that acquires operating flights in a plurality of zones formed by the departure point and the plurality of visit points included in the plan generation condition from a computer reservation system on the basis of the fare products retrieved by the first fare product retrieval unit and the second fare product retrieval unit, thereby generating a flight plan including a flight schedule formed of a combination of the operating flights in the plurality of zones and fares thereof. The forced breakpoint is a visit point other than the tentative breakpoint, and by setting the visit point of the forced breakpoint as the breakpoint, the visit point of the tentative breakpoint can satisfy the stopover rule.

Thus, the visit point at the longest distance from the departure point is selected as the "tentative breakpoint", and the visit point which cannot be set as the breakpoint due to a charge calculation rule of the fare product is selected as the "forced breakpoint". In this case, since the point other than the "tentative breakpoint" is retrieved from the fare product database as the "forced breakpoint", even the product to be out of retrieval just by the "tentative breakpoint" is included in a retrieval result. Therefore, it becomes possible to generate the flight plan with fewer omissions.

Also, in the flight-plan generating apparatus of the present invention, the fare product database stores information on whether or not each of the plurality of visitable points can be set as a breakpoint candidate, the breakpoint candidate is the visit point other than the tentative breakpoint, the second fare product retrieval unit may be capable of considering the breakpoint candidate as the forced breakpoint to retrieve the fare product, and the flight plan generation unit may be capable of considering the breakpoint candidate as the breakpoint to calculate the fare.

Thus, since the "breakpoint candidate" is considered as the forced breakpoint when retrieving the fare product, even the product to be out of the retrieval just by the "tentative breakpoint" is included in the retrieval result. Further, when publishing the fare, since the "breakpoint candidate" is considered as the breakpoint, the correct fare is calculated. Therefore, it becomes possible to generate the flight plan without omissions, to which the correct fare is applied.

The method of the present invention is the method that generates a flight plan to travel around a plurality of visit points with a round-trip airline ticket. A fare product database for storing information on fare products stores information on a plurality of visitable points determined for each fare product, information on whether or not each of the plurality of visitable points can be set as a breakpoint, information on whether or not each of the plurality of visitable points can be set as a forced breakpoint, and a stopover rule for the plurality of visitable points. The method includes, when a plan generation condition including a departure point, the plurality of visit points and a visit schedule is inputted, acquiring information on a distance from the departure point to each of the plurality of visit points, selecting the visit point at the longest distance from the departure point as a tentative breakpoint from the plurality of visit points, retrieving a fare product which includes the plurality of visit points in the plan generation condition in the plurality of visitable points and for which the visit point of the tentative breakpoint can be set as the breakpoint, from the fare product database, by using the plurality of visit points in the plan generation condition and the tentative breakpoint as a retrieval key, retrieving a fare product which includes the plurality of visit points in the plan generation condition in the plurality of visitable points and for which the visit point of the forced breakpoint can be set as the breakpoint, from the fare product database, by using the plurality of visit points in the plan generation condition and the forced breakpoint as a retrieval key, and acquiring operating flights in a plurality of zones formed by the departure point and the plurality of visit points included in the plan generation condition from a computer reservation system on the basis of the fare products retrieved by a first fare product retrieval unit and a second fare product retrieval unit, thereby generating a flight plan including a flight schedule formed of a combination of the operating flights in the plurality of zones and fares thereof. The forced breakpoint is a visit point other than the tentative breakpoint, and by setting the visit point of the forced breakpoint as the breakpoint, the visit point of the tentative breakpoint can satisfy the stopover rule.

By the method as well, similarly to the above, the visit point at the longest distance from the departure point is selected as the "tentative breakpoint", and the visit point which cannot be set as the breakpoint due to the charge calculation rule of the fare product is selected as the "forced breakpoint". In this case, since the point other than the "tentative breakpoint" is retrieved from the fare product database as the "forced breakpoint", even the product to be out of the retrieval just by the "tentative breakpoint" is included in the retrieval result. Therefore, it becomes possible to generate the flight plan with fewer omissions.

The program of the present invention is the program for generating a flight plan to travel around a plurality of visit points with a round-trip airline ticket, a fare product database for storing information on fare products stores information on a plurality of visitable points determined for each fare product, information on whether or not each of the plurality of visitable points can be set as a breakpoint, information on whether or not each of the plurality of visitable points can be set as a forced breakpoint, and a stopover rule for the plurality of visitable points, and the program makes, when a plan generation condition including a departure point, the plurality of visit points and a visit schedule is inputted, a computer execute: processing of acquiring information on a distance from the departure point to each of the plurality of visit points and selecting the visit point at the longest distance from the departure point as a tentative breakpoint from the plurality of visit points; processing of retrieving a fare product which includes the plurality of visit points in the plan generation condition in the plurality of visitable points and for which the visit point of the tentative breakpoint can be set as the breakpoint, from the fare product database, by using the plurality of visit points in the plan generation condition and the tentative breakpoint as a retrieval key; processing of retrieving a fare product which includes the plurality of visit points in the plan generation condition in the plurality of visitable points and for which the visit point of the forced breakpoint can be set as the breakpoint, from the fare product database, by using the plurality of visit points in the plan generation condition and the forced breakpoint as a retrieval key; and processing of acquiring operating flights in a plurality of zones formed by the departure point and the plurality of visit points included in the plan generation condition from a computer reservation system on the basis of the fare products retrieved by a first fare product retrieval unit and a second fare product retrieval unit, thereby generating a flight plan including a flight schedule formed of a combination of the operating flights in the plurality of zones and fares thereof. The forced breakpoint is a visit point other than the tentative breakpoint, and by setting the visit point of the forced breakpoint as the breakpoint, the visit point of the tentative breakpoint can satisfy the stopover rule.

By the program as well, similarly to the above, the visit point at the longest distance from the departure point is selected as the "tentative breakpoint", and the visit point which cannot be set as the breakpoint due to the charge calculation rule of the fare product is selected as the "forced breakpoint". In this case, since the point other than the "tentative breakpoint" is retrieved from the fare product database as the "forced breakpoint", even the product to be out of the retrieval just by the "tentative breakpoint" is included in the retrieval result. Therefore, it becomes possible to generate the flight plan with fewer omissions.

By using the "forced breakpoint" when retrieving the product, the present invention makes it possible to select more products that are appropriate and generate the flight plan with fewer omissions.

Hereinafter, the flight-plan generating apparatus according to the embodiment of the present invention will be described using drawings. The present embodiment illustrates a case of the flight-plan generating apparatus used in a flight reservation system or the like. The flight-plan generating apparatus of the present embodiment has a function of generating a flight plan to travel around a plurality of visit points with a round-trip airline ticket. The function is achieved by a program stored in an HDD or a memory or the like of the flight-plan generating apparatus.

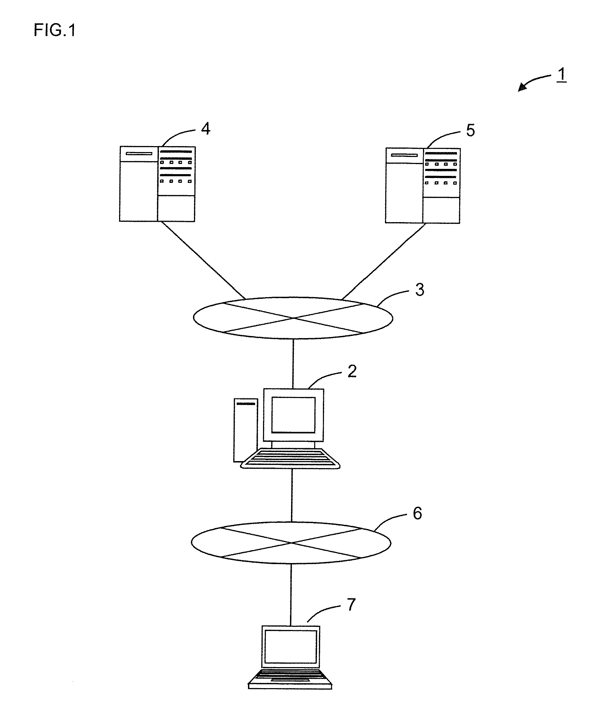

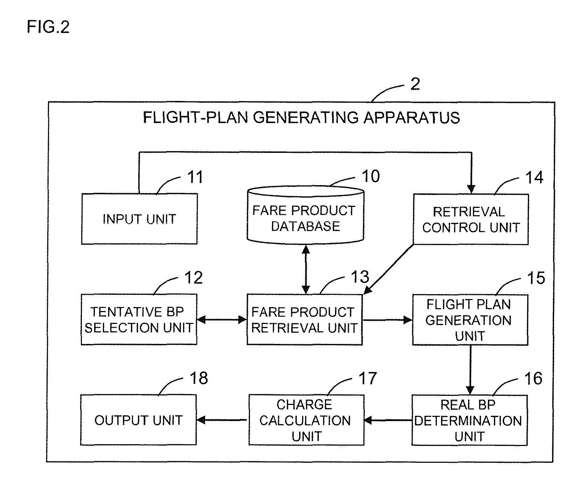

A configuration of the flight-plan generating apparatus according to the embodiment of the present invention will be described with reference to the drawings. Figure 1 is a configuration diagram of the flight reservation system to which the flight-plan generating apparatus of the present embodiment is applied, and Figure 2 is a block diagram of the flight-plan generating apparatus of the present embodiment.

First, with reference to Figure 1, the overall configuration of a system (flight reservation system) to which the flight-plan generating apparatus of the present embodiment is applied will be described. As illustrated in Figure 1, in a flight reservation system 1 of the present embodiment, a flight-plan generating apparatus 2 is connected through a network 3 to a CRS (computer reservation system) 4 and a GDS (global destination system) 5. Also, the flight-plan generating apparatus 2 is connected through a network 6 to a travel agency terminal 7.

The CRS 4 is a computer system for reserving seats of an aircraft or the like, and for instance, the CRS 4 of SABRE and APOLLO or the like is known. The GDS 5 is a reservation/ticket issuance system of travel related products utilizing computers, and for instance, Sabre, Galileo, Amadeus and Worldspan or the like are known. The CRS 4 and the GDS 5 correspond to the computer reservation system of the present invention.

The travel agency terminal 7 is a computer installed in a travel agency, and a general purpose computer is used for instance. An operator of the travel agency uses a browser function of the travel agency terminal 7 to receive provision of a flight plan generation service. Though not illustrated, the flight-plan generating apparatus 2 is connected with many travel agency terminals 7. The travel agency terminal 7 may be a portable terminal (including a cellular phone). Also, the flight-plan generating apparatus 2 may provide a similar flight plan generation service to terminals of not only travel agencies but also users (customers, travelers).

The flight-plan generating apparatus 2 receives a condition of flight plan generation from the travel agency terminal 7 and generates a flight plan by referring to a database of fare products, as the overall operation. At the time, useful information is appropriately obtained from the CRS 4 and the GDS 5. The CRS 4 and the GDS 5 provide various kinds of functions. The flight-plan generating apparatus 2 utilizes a distance calculation function, a vacant seat inquiry function, a reservation record generation function, and an automatic fare calculation function, etc., among the functions. Then, the flight-plan generating apparatus 2 presents the generated flight plan to the travel agency terminal 7.

Here, with reference to Figure 2, the configuration of the flight-plan generating apparatus 2 will be described in detail. As illustrated in Figure 2, the flight-plan generating apparatus 2 includes a fare product database 10 which stores the information on the fare products. The fare product database 10 stores the information on the plurality of visitable points determined for each fare product, and the information on whether or not each of the plurality of visitable points can be set as the breakpoint. Also, the fare product database 10 stores fare information for each of the plurality of zones formed by the departure point and the plurality of visit points included in the plan generation condition.

The flight-plan generating apparatus 2 includes an input unit 11 to which the plan generation condition is inputted from the travel agency terminal 7. The plan generation condition includes the departure point, the plurality of visit points, a visit schedule and a visit order, etc.

Also, the flight-plan generating apparatus 2 includes a tentative BP selection unit 12 that selects the tentative breakpoint (tentative BP) from the visit points (the plurality of visit points) in the plan generation condition. The tentative BP selection unit 12 acquires the information on the distance from the departure point to each of the plurality of visit points on the basis of the information on the visit points included in the plan generation condition, and selects the visit point at the longest distance from the departure point as the "tentative breakpoint" from the plurality of visit points. In this case, the tentative BP selection unit 12 is capable of accessing the CRS 4 and the GDS 5, utilizing the distance calculation function (typically, a mile calculation function) of the CRS 4 and the GDS 5, and obtaining the information to be used for selecting the tentative BP.

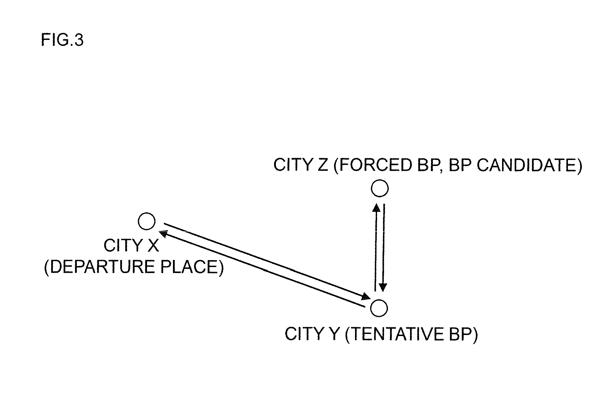

For instance, as illustrated in Figure 3, from the plurality of visit points (cities Y and Z), the visit point (city Y) at the longest distance from the departure point (city X) is selected as the "tentative breakpoint".

The flight-plan generating apparatus 2 includes a fare product retrieval unit 13 that retrieves the fare product database 10 and selects an appropriate fare product. The fare product retrieval unit 13 has a function of selecting the appropriate fare product from the fare product database 10 by using the plurality of visit points in the plan generation condition and the tentative breakpoint as the retrieval key. In this case, the fare product retrieval unit 13 selects the fare product which includes the plurality of visit points in the plan generation condition in the plurality of visitable points and for which the visit point of the tentative breakpoint can be set as the breakpoint.

Also, the fare product database 10 stores the information on whether or not each of the plurality of visitable points can be set as the "forced breakpoint", and the stopover rule for the plurality of visitable points. The "forced breakpoint" is the visit point other than the tentative breakpoint. By setting the visit point of the forced breakpoint as the breakpoint, the visit point of the tentative breakpoint satisfies the stopover rule. For instance, in an example in Figure 3, it is assumed that a certain fare product has the stopover rule of "approving a stopover at the city Y only (not approving the stopover at the city Z)". In that case, when the city Y (tentative breakpoint) is turned to the breakpoint, the city Z is turned to a stopover point without satisfying the stopover rule of the fare product. In that case, when the city Z is turned to the forced breakpoint, the city Z (forced breakpoint) is turned to the breakpoint, and the city Y is turned to a stopover point, thereby satisfying the stopover rule of the fare product. Such a point is called the "forced breakpoint".

The fare product retrieval unit 13 has the function of selecting the appropriate fare product from the fare product database 10 by using the plurality of visit points in the plan generation condition and the forced breakpoint as the retrieval key. In this case, the fare product retrieval unit 13 selects the fare product which includes the plurality of visit points in the plan generation condition in the plurality of visitable points and for which the visit point of the forced breakpoint can be set as the breakpoint.

Further, the flight-plan generating apparatus 2 includes a retrieval control unit 14 that controls the fare product retrieval unit 13. The retrieval control unit 14 controls the fare product retrieval unit 13 so that the retrieval is performed first with the "forced breakpoint" as the retrieval key from all the fare products stored in the fare product database 10 and then the retrieval is performed with the "tentative breakpoint" as the retrieval key from the remaining fare products not extracted in the previous retrieval. In the example in Figure 3, the retrieval is controlled so that the retrieval with the city Z as the forced BP is performed first and then the retrieval with the city Y as the tentative BP is performed. When performing the retrieval by the plurality of "forced breakpoints", the products are retrieved in an order opposite to the visit order in the plan generation condition. Here, the retrieval control unit 14 (or, the fare product retrieval unit 13 controlled by the retrieval control unit 14) corresponds to the first fare product retrieval unit and the second fare product retrieval unit of the present invention. That is, the first fare product retrieval unit and the second fare product retrieval unit of the present invention may be one retrieval unit (fare product retrieval unit).

Also, the fare product database 10 stores the information on whether or not each of the plurality of visitable points can be set as the "breakpoint candidate". The "breakpoint candidate" is the visit point other than the tentative breakpoint, and is the point to be considered as the "forced breakpoint" in terms of product retrieval, and considered as a "real breakpoint" in terms of fare calculation. For instance, in the example in Figure 3, when the city Z is the breakpoint candidate, in terms of the product retrieval, the city Z (breakpoint candidate) is considered as the forced breakpoint and the "fare product that satisfies the stopover rule, with the city Z as the breakpoint and the city Y as the stopover point" is selected. However, in terms of the fare calculation, when the city Z is considered as the forced breakpoint, the correct fare is not calculated. In this case, in terms of the fare calculation, the city Z (breakpoint candidate) is considered as the real breakpoint. Thus, the correct fare is calculated. Such a point is called the "breakpoint candidate".

The fare product retrieval unit 13 has the function of selecting the appropriate fare product from the fare product database 10 by using the plurality of visit points in the plan generation condition and the breakpoint candidate as the retrieval key. When retrieving the product, the breakpoint candidate is considered as the forced breakpoint. In this case, the fare product retrieval unit 13 selects the fare product which includes the plurality of visit points in the plan generation condition in the plurality of visitable points and for which the visit point of the breakpoint candidate can be set as the breakpoint.

Then, the flight-plan generating apparatus 2 includes a flight plan generation unit 15 that generates a specific flight plan corresponding to the plan generation condition from the fare products selected by the fare product retrieval unit 13. The flight plan generation unit 15 acquires the operating flights in the plurality of zones formed by the departure point and the plurality of visit points included in the plan generation condition from the CRS 4 and the GDS 5 on the basis of the fare products retrieved by the fare product retrieval unit 13, thereby generating the flight plan including the flight schedule formed of the combination of the operating flights in the plurality of zones and the fares thereof. In this case, the flight plan generation unit 15 acquires a vacant seat situation by utilizing the vacant seat inquiry function of the CRS 4 and the GDS 5. Thus, the plan is generated with flights that actually have vacant seats.

Also, the flight plan generation unit 15 includes a real BP determination unit 16 that determines the actual breakpoint (real breakpoint. Also called a real BP) of the generated flight plan, and a charge calculation unit 17 that calculates the accurate fare of the flight plan. The real BP is needed to calculate the accurate fare. The real BP determination unit 16 determines the real BP for each flight plan by utilizing the automatic fare calculation function of the CRS 4 and the GDS 5. By using the real BP, the charge calculation unit 17 obtains the accurate fare by utilizing the automatic fare calculation function of the CRS 4 and the GDS 5.

The flight-plan generating apparatus 2 includes an output unit 18 for presenting the flight plan generated in this way to the travel agency terminal 7. The output unit 18 outputs the flight plan generated by the flight plan generation unit 15 to the travel agency terminal 7 together with the fare calculated by the charge calculation unit 17. The travel agency terminal 7 presents the flight plan on a Web screen by using a browser function, for instance.

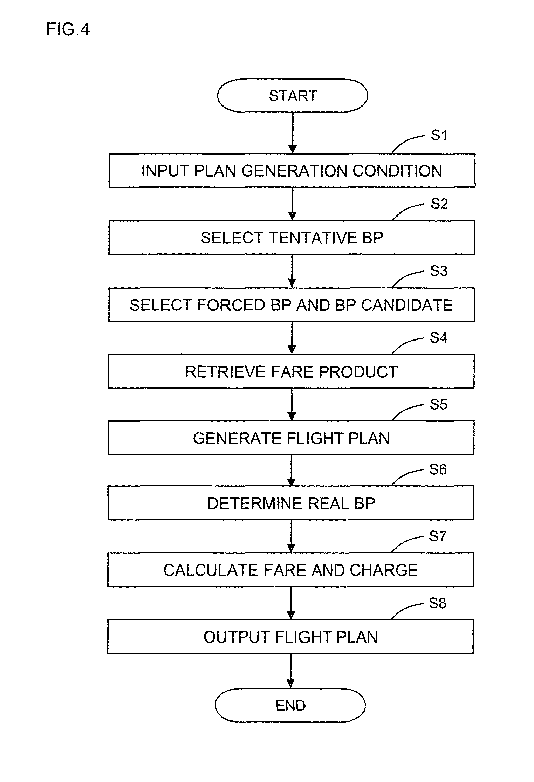

For the flight-plan generating apparatus 2 configured as described above, the operation thereof will be described with reference to the flowchart in Figure 4.

When generating the flight plan using the flight-plan generating apparatus 2 of the embodiment of the present invention, first, the plan generation condition (the departure point, the plurality of visit points, the visit schedule and the visit order, etc.,) is inputted from the travel agency terminal 7 (S1). Then, the flight-plan generating apparatus 2 selects the tentative BP from the visit points (the plurality of visit points) in the inputted plan generation condition (S2). Then, the flight-plan generating apparatus 2 selects the point that can be set as the forced BP and the point that can be set as the BP candidate from the plurality of visit points (S3). Next, the flight-plan generating apparatus 2 retrieves the fare products with the tentative BP, the forced BP and the BP candidate as the retrieval key, respectively (S4). Then, as a result of the retrieval, the fare products (fare product group) selected from the fare product database 10 are listed.

The flight-plan generating apparatus 2 acquires the operating flights in the plurality of zones formed by the departure point and the plurality of visit points included in the plan generation condition from the listed fare product group from the CRS 4 and the GDS 5, thereby generating the flight plan (normally, the plurality of flight plans) (S5).

Next, the flight-plan generating apparatus 2 determines the real BP for each generated flight plan (S6). At the time, for the fare products selected with the "tentative BP" and the "BP candidate" as the retrieval key, the real BP can be determined by utilizing the CRS 4 and the GDS 5. As a method of determining the real BP by utilizing the CRS 4 and the GDS 5, for instance, there are a method of obtaining the real BP from fare calculation and a method of obtaining the real BP from mile calculation, or the like.

For the fare product selected with the "forced BP" as the retrieval key, the real BP cannot be determined by utilizing the CRS 4 and the GDS 5 due to the charge calculation rule of the fare product. The fare of an international airline ticket is determined on the basis of rules determined by IATA and individual airline companies, however, for instance, when traveling around individual cities (such as London, Paris and Rome) in Europe respectively at the almost same distance from Japan (Tokyo), there is a case that the real BP cannot be determined by utilizing the CRS 4 and the GDS 5, going against a charge rule determined by IATA. For instance, the rule of calculating the lowest price for each zone is applied in the CRS 4 and the GDS 5, however, when there are flights departing and arriving in Japan or when there are flights beyond arrival on international flights, the real BP cannot be obtained from the fare calculation, going against the rule.

Also, when traveling around through a route of "Tokyo→Hong Kong→Beijing→Hong Kong→Tokyo", while it is originally desirable to turn "Beijing" to the real BP (turning point), there is a case that "Hong Kong" is turned to the real BP according to the mile calculation and a result is that neither "Beijing" or "Hong Kong" is pertinent to the real BP. Thus, in such a case, the real BP cannot be obtained from the mile calculation. The visit point (city) that cannot be set as the real BP due to the charge calculation rule of the fare product in this way is handled as the real BP by being specified as the "forced BP". In this way, the real BP is determined.

When the real BP is determined, an official airline ticket fare of the flight plan is calculated (S7). For the flight plan generated using the fare products selected with the "tentative BP" and the "BP candidate", a final charge is calculated by acquiring the information on the fare (basic charge) from the fare product database 10 and adding a mile UP rate and an HIF check charge that are acquired by utilizing the CRS 4 and the GDS 5 to the basic charge. On the other hand, for the flight plan generated using the fare product selected with the "forced BP", the final charge is calculated on the basis of only the information on the fare from the fare product database 10. It is because addition of the mile UP rate and the HIF check charge acquired by utilizing the CRS 4 and the GDS 5 is not originally needed (since a charge higher than the actual charge is to be presented when added), in this case.

When the flight plan generated in this way is outputted to the travel agency terminal 7 together with the calculated fare (S8), the travel agency terminal 7 presents the flight plan on the Web screen, for instance.

According to such a flight-plan generating apparatus 2 of the present embodiment, by using the "forced breakpoint" when retrieving the product, many appropriate products can be selected, and it becomes possible to generate the flight plan with fewer omissions. Further, by using the "breakpoint candidate" when calculating the fare, it becomes possible to generate the flight plan without omissions, to which the correct fare is applied.

That is, in the present embodiment, the visit point at the longest distance from the departure point is selected as the tentative breakpoint (tentative BP), and the visit point that cannot be set as the breakpoint due to the charge calculation rule of the fare product is selected as the forced breakpoint (forced BP). In this case, since the point other than the tentative BP is retrieved from the fare product database as the forced BP, even the product to be out of the retrieval just by the tentative BP is included in the retrieval result. Therefore, it becomes possible to generate the flight plan with fewer omissions.

The forced breakpoint (forced BP) is for retrieving the fare product, and can be the real breakpoint (real BP) in terms of the product retrieval. However, the forced BP cannot be the real BP in terms of the fare calculation (that is, in the CRS 4 and the GDS 5), and in determination of the real BP and determination of the final charge, the fare product database 10 is utilized without utilizing the CRS 4 and the GDS 5.

Also, in the present embodiment, when retrieving the fare product, since the breakpoint candidate (BP candidate) is considered as the forced BP, even the product to be out of the retrieval just by the tentative BP is included in the retrieval result. Further, when calculating the fare, since the BP candidate is considered as the breakpoint, the correct fare is calculated. Therefore, it becomes possible to generate the flight plan without omissions, to which the correct fare is applied.

The breakpoint candidate (BP candidate) is for calculating the correct fare, and can be the real breakpoint in terms of the fare calculation. That is, since the BP candidate can be the real BP in the CRS 4 and the GDS 5, in the determination of the real BP and the determination of the final charge, the CRS 4 and the GDS 5 can be utilized and the same handling as the tentative BP is allowed.

For instance, in the example in Figure 3, it is assumed that there is a reservation rule that the city where a stopover is allowed is the "city Y" only for the fare product of a certain airline company. In that case, when the "city Y" is turned to the tentative BP in a route of "city X→city Y→city Z→city Y→city X", since the stopover is not allowed in the "city Z" (it is against the reservation rule), the fare product of the airline company is omitted from the retrieval. In such a case, when the "city Z" is specified as the "forced BP", the fare products (effective plans) of the airline company, that is "city X→city Y (via)→city Z (stay)→city Y (stay)→city X" with the "city Y" as the stopover point, are listed as the retrieval result. In this way, it becomes possible to generate the flight plan with fewer omissions. Further, in this example, when the "city Z" is specified as the "BP candidate", when calculating the fare, since the "city Z" is considered as the real BP, the correct fare is calculated. In this way, it becomes possible to generate the flight plan without omissions, to which the correct fare is applied.

While the embodiment of the present invention is described above by showing examples, the scope of the present invention is not limited by the examples, and the present invention can be changed/modified in accordance with an object within the scope described in claims.

A preferred embodiment of the present invention which is conceivable at the present point of time is described above. However, it is to be understood that various modifications can be made with respect to the present embodiment, and all such modifications as within the true spirit and scope of the present invention are intended to be included in the accompanying claims.

### Industrial Applicability

As described above, the flight-plan generating apparatus according to the present invention has an effect of being capable of generating the flight plan with fewer omissions, is applicable to the flight reservation system or the like, and is thus useful.

### Reference Signs List

- 1: Flight reservation system
- 2: Flight-plan generating apparatus
- 3: Network
- 4: CRS
- 5: GDS
- 6: Network
- 7: Travel agency terminal
- 10: Fare product database
- 11: Input unit
- 12: Tentative BP selection unit
- 13: Fare product retrieval unit
- 14: Retrieval control unit
- 15: Flight plan generation unit
- 16: Real BP determination unit
- 17: Charge calculation unit
- 18: Output unit

## Claims

1. A flight-plan generating apparatus that generates a flight plan to travel around a plurality of visit points with a round-trip airline ticket, the flight-plan generating apparatus comprising:
a fare product database that stores information on fare products, the fare product database storing information on a plurality of visitable points determined for each fare product, information on whether or not each of the plurality of visitable points can be set as a breakpoint, information on whether or not each of the plurality of visitable points can be set as a forced breakpoint, and a stopover rule for the plurality of visitable points;
a condition input unit to which a plan generation condition including a departure point, the plurality of visit points and a visit schedule is inputted;
a tentative breakpoint selection unit that acquires information on a distance from the departure point to each of the plurality of visit points and selects the visit point at the longest distance from the departure point as a tentative breakpoint from the plurality of visit points;
a first fare product retrieval unit that retrieves a fare product which includes the plurality of visit points in the plan generation condition in the plurality of visitable points and for which the visit point of the tentative breakpoint can be set as the breakpoint, from the fare product database, by using the plurality of visit points in the plan generation condition and the tentative breakpoint as a retrieval key;
a second fare product retrieval unit that retrieves a fare product which includes the plurality of visit points in the plan generation condition in the plurality of visitable points and for which the visit point of the forced breakpoint can be set as the breakpoint, from the fare product database, by using the plurality of visit points in the plan generation condition and the forced breakpoint as the retrieval key; and
a flight plan generation unit that acquires operating flights in a plurality of zones formed by the departure point and the plurality of visit points included in the plan generation condition from a computer reservation system on the basis of the fare products retrieved by the first fare product retrieval unit and the second fare product retrieval unit, thereby generating a flight plan including a flight schedule formed of a combination of the operating flights in the plurality of zones and fares thereof,
wherein the forced breakpoint is a visit point other than the tentative breakpoint, and by setting the visit point of the forced breakpoint as the breakpoint, the visit point of the tentative breakpoint can satisfy the stopover rule.

2. The flight-plan generating apparatus according to claim 1,
wherein
the fare product database stores information on whether or not each of the plurality of visitable points can be set as a breakpoint candidate, and
the breakpoint candidate is a visit point other than the tentative breakpoint, the second fare product retrieval unit is capable of considering the breakpoint candidate as the forced breakpoint to retrieve the fare product, and the flight plan generation unit is capable of considering the breakpoint candidate as the breakpoint to calculate the fare.

3. A flight-plan generating method that generates a flight plan to travel around a plurality of visit points with a round-trip airline ticket,
wherein a fare product database for storing information on fare products stores information on a plurality of visitable points determined for each fare product, information on whether or not each of the plurality of visitable points can be set as a breakpoint, information on whether or not each of the plurality of visitable points can be set as a forced breakpoint, and a stopover rule for the plurality of visitable points,
the method including,
when a plan generation condition including a departure point, the plurality of visit points and a visit schedule is inputted,
acquiring information on a distance from the departure point to each of the plurality of visit points and selecting the visit point at the longest distance from the departure point as a tentative breakpoint from the plurality of visit points,
retrieving a fare product which includes the plurality of visit points in the plan generation condition in the plurality of visitable points and for which the visit point of the tentative breakpoint can be set as the breakpoint, from the fare product database, by using the plurality of visit points in the plan generation condition and the tentative breakpoint as a retrieval key,
retrieving a fare product which includes the plurality of visit points in the plan generation condition in the plurality of visitable points and for which the visit point of the forced breakpoint can be set as the breakpoint, from the fare product database, by using the plurality of visit points in the plan generation condition and the forced breakpoint as the retrieval key, and
acquiring operating flights in a plurality of zones formed by the departure point and the plurality of visit points included in the plan generation condition from a computer reservation system on the basis of the fare products retrieved, thereby generating a flight plan including a flight schedule formed of a combination of the operating flights in the plurality of zones and fares thereof,
wherein the forced breakpoint is a visit point other than the tentative breakpoint, and by setting the visit point of the forced breakpoint as the breakpoint, the visit point of the tentative breakpoint can satisfy the stopover rule.

4. A flight-plan generating program for generating a flight plan to travel around a plurality of visit points with a round-trip airline ticket,
wherein a fare product database for storing information on fare products stores information on a plurality of visitable points determined for each fare product, information on whether or not each of the plurality of visitable points can be set as a breakpoint, information on whether or not each of the plurality of visitable points can be set as a forced breakpoint, and a stopover rule for the plurality of visitable points,
the program makes, when a plan generation condition including a departure point, the plurality of visit points and a visit schedule is inputted, a computer execute:
processing of acquiring information on a distance from the departure point to each of the plurality of visit points and selecting the visit point at the longest distance from the departure point as a tentative breakpoint from the plurality of visit points;
processing of retrieving a fare product which includes the plurality of visit points in the plan generation condition in the plurality of visitable points and for which the visit point of the tentative breakpoint can be set as the breakpoint, from the fare product database, by using the plurality of visit points in the plan generation condition and the tentative breakpoint as a retrieval key;
processing of retrieving a fare product which includes the plurality of visit points in the plan generation condition in the plurality of visitable points and for which the visit point of the forced breakpoint can be set as the breakpoint, from the fare product database, by using the plurality of visit points in the plan generation condition and the forced breakpoint as the retrieval key; and
processing of acquiring operating flights in a plurality of zones formed by the departure point and the plurality of visit points included in the plan generation condition from a computer reservation system on the basis of the fare products retrieved, thereby generating a flight plan including a flight schedule formed of a combination of the operating flights in the plurality of zones and fares thereof,
wherein the forced breakpoint is a visit point other than the tentative breakpoint, and by setting the visit point of the forced breakpoint as the breakpoint, the visit point of the tentative breakpoint can satisfy the stopover rule.
